# FASCICULE DE BREVET EUROPEEN

(11) **EP 0 439 388 B1**
(45) Date de publication et mention de la délivrance du brevet: **06.10.1993**
(21) Numéro de dépôt: 91400095.5
(22) Date de dépôt: 17.01.1991
(51) Int. Cl.: C10G 35/12

(54) **Procédé de réformage catalytique dans plusieurs zones réactionnelles à lit mobile côte à côte**
Katalytisches Reformierverfahren in einer Mehrzahl von nebeneinandergestellten Reaktionszonen mit beweglichem Bett
Catalytic reforming process in several juxta-posed moving bed reaction zones

(30) Priorité: 26.01.1990 FR 9001039
(43) Date de publication de la demande: 31.07.1991
(73) Titulaire: INSTITUT FRANCAIS DU PETROLE, 92502 Rueil-Malmaison (FR)
(72) Inventeur: Macaire, Jean-Claude, F-92000 Nanterre (FR); Bischoff, Didier, F-92500 Rueil Malmaison (FR); De Bonneville, Jean, F-92500 Rueil Malmaison (FR)

(56) Documents cités:
- EP-A- 0 366 525
- CH-A- 552 049
- FR-A- 2 223 079
- US-A- 2 868 721
- US-A- 3 839 196
- US-A- 4 172 027

## Description

La présente invention concerne un procédé de conversion continue d'hydrocarbures, en présence d'un catalyseur, à une température comprise entre 480° C et 600° C, dans lequel on fait circuler une charge initiale constituée d'hydrocarbures et éventuellement d'un gaz tel que de l'hydrogène, à travers au moins deux zones de réaction de type à lit mobile ; le catalyseur circule sous forme d'un lit mobile à travers les zones de réaction en s'écoulant en continu de haut en bas des dites zones ; le catalyseur est ensuite soutiré en continu du bas de la dernière zone de réaction et est envoyé dans une zone de régénération ; ensuite, le catalyseur régénéré est envoyé dans une zone de traitement à l'hydrogène, distincte de la zone de réaction, où il est traité à une température généralement inférieure à la température réactionnelle, puis le catalyseur, après avoir été traité à l'hydrogène, est éventuellement envoyé en continu dans une zone de sulfuration, distincte de la zone de traitement à l'hydrogène et distincte de la zone de réaction, et le catalyseur, après avoir été traité par un composé sulfuré, s'écoule alors en continu vers la zone de réaction.

La présente invention concerne plus particulièrement un procédé d'hydroréformage d'hydrocarbures, la charge pouvant être par exemple un naphta distillant entre environ 60° C et 220°C, en particulier un naphta de distillation direct ; l'invention concerne également la production d'hydrocarbures aromatiques, par exemple la production de benzène, de toluène et de xylènes (ortho, méta ou para), soit à partir d'essences insaturées ou non, (par exemple des essences de pyrolyse de cracking (craquage), en particulier de steam cracking (craquage à la vapeur), ou de reforming catalytique [réformage]), soit encore à partir d'hydrocarbures naphténiques capables par déshydrogénation de se transformer en hydrocarbures aromatiques.

La charge circule successivement dans chaque réacteur ou zone de réaction suivant un écoulement axial ou radial (c'est-à-dire du centre vers la périphérie ou de la périphérie vers le centre). Les zones de réactions sont disposées en série, côte à côte, de sorte que la charge s'écoule successivement à travers chacune de ces zones de réaction, avec chauffage intermédiaire de la charge entre les zones de réactions ; le catalyseur frais est introduit en haut de la première zone de réaction où est introduite la charge fraîche ; il s'écoule ensuite en continu de haut en bas de cette zone d'où il est soutiré en continu par le bas, et par tout moyen approprié (lift en particulier) il est transporté en haut de la zone de réaction suivante dans laquelle il s'écoule en continu également de haut en bas, et ainsi de suite jusqu'à la dernière zone de réaction en bas de laquelle le catalyseur est également soutiré en continu puis envoyé dans une zone de régénération.

La circulation du catalyseur du bas d'une zone de réaction au haut d'une autre zone de réaction, du bas de la dernière zone de réaction à la zone de régénération et du bas de la zone de régénération au haut de la première zone de réaction, est réalisée au moyen de tout dispositif élévateur connu que dans la suite de la description et des revendications on désignera par le mot "lift".

Le solide qui se déplace de zone de réaction en zone de réaction et vers la zone de régénération peut être par exemple un catalyseur en grains. Ce catalyseur peut se présenter par exemple sous la forme de billes sphériques de diamètre compris généralement entre 1 et 3 mm, de préférence entre 1,5 et 2 mm, sans que ces valeurs soient limitatives. La densité en vrac du catalyseur est généralement comprise entre 0,4 et 1, de préférence entre 0,5 et 0,9 et plus particulièrement entre 0,55 et 0,8 sans que ces valeurs soient limitatives.

Quant à la régénération proprement dite du catalyseur, elle peut être effectuée par tout moyen connu. De préférence, le catalyseur est :
a) soumis à une combustion à l'aide d'un gaz renfermant de l'oxygène moléculaire;
b) soumis à une oxychloration au moyen d'un gaz renfermant de l'oxygène moléculaire et simultanément au moyen d'un halogène ou d'un composé halogéné, par exemple un hydracide halogéné ou un halogénure d'alkyle;
c) soumis à un traitement final à l'aide d'un gaz renfermant de l'oxygène moléculaire.

Ces trois traitements s'effectuent soit successivement dans une zone unique à lit fixe, soit dans une enceinte à lit mobile, le catalyseur défilant successivement dans 3 zones distinctes où sont effectuées chacune des 3 étapes de régénération.

La régénération est suivie d'une purge, à l'azote par exemple, pour éliminer du catalyseur toutes traces d'oxygène gazeux résiduel.

Le brevet US 4 172 027 de la demanderesse décrit plusieurs aspects d'un tel procédé toujours d'actualité aujourd'hui pour les nombreux avantages qu'elle procure. Récemment, l'art antérieur a été amélioré par la demanderesse dans la demande de brevet français N° 88/14246 du 27 Octobre 1989 (FR-A-2 638 463).

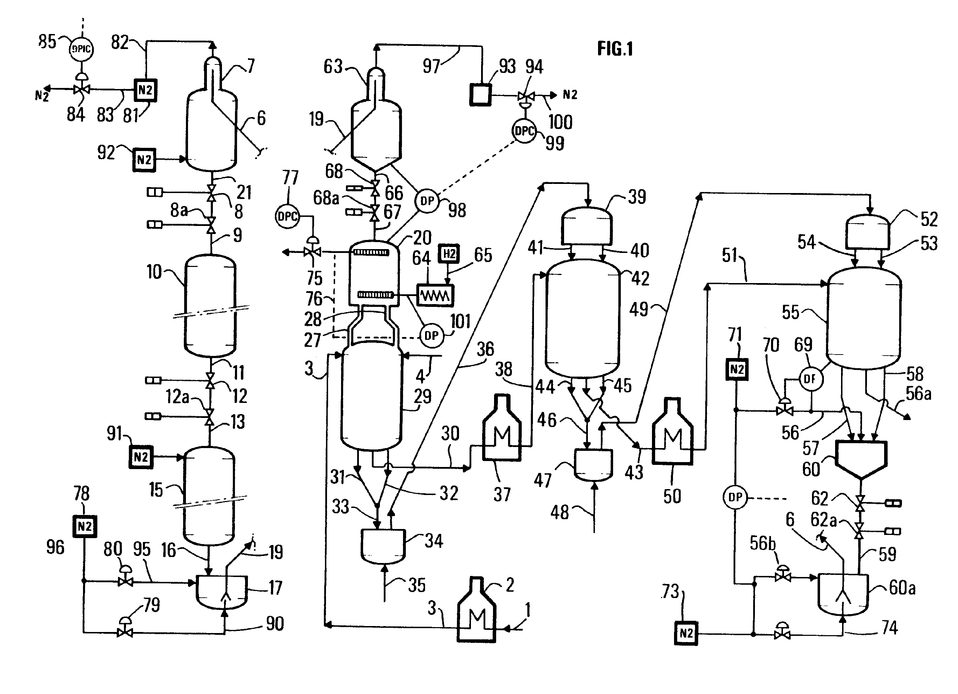

La figure 1 illustre cet art antérieur récent ; on utilise, comme gaz de certains des lifts, de l'hydrogène de l'unité purifié pour transférer le catalyseur d'un réacteur à l'autre. Cet hydrogène dit purifié, peut renfermer jusqu'à 10 %, en volume, ou mieux 4 %, d'hydrocarbures divers légers tels que l'éthane et le propane. A noter que le méthane n'est pas considéré comme une impureté et ce jusqu'à une quantité en volume égale à celle de l'hydrogène, ce qui signifierait que dans ce cas limite, le courant d'hydrogène dit purifié renfermerait 50 % de méthane en volume.

L'hydrogène de l'unité peut donc être utilisé, comme gaz de lift, tel quel, non seulement provisoirement lorsque les autres sources d'hydrogène font défaut, mais également, après purification simple, comme source d'hydrogène pendant toute la durée de la réaction de reforming (reformage) ou de production d'hydrocarbures aromatiques, pour le traitement à l'hydrogène du catalyseur régénéré.

Dans la figure 1, qui représente une illustration possible mais non limitative, on utilise 3 réacteurs. La charge est introduite par la conduite 1, le four 2, la ligne 3 dans le premier réacteur 29. L'effluent du premier réacteur est soutiré par la conduite 30 et est envoyé à travers le four 37 et la conduite 38 dans le deuxième réacteur 42. L'effluent du deuxième réacteur est soutiré par la conduite 43 et est envoyé à travers le four 50 et la conduite 51 dans le troisième réacteur 55. L'effluent du troisième réacteur est soutiré par la conduite 56 a. Le catalyseur neuf, au démarrage de l'unité, est introduit par la conduite 4 sur la figure 1. Le catalyseur en provenance de la zone de régénération 10, pénètre dans le premier réacteur 29 par les jambes 27 et 28 dans lequel il chemine sous forme d'un lit mobile. Le catalyseur est soutiré du réacteur 29 par une pluralité de conduites telles que 31 et 32 et par la conduite 33 par laquelle il atteint le pot de lift 34. Ce soutirage est effectué en continu (un système de vannes n'étant pas indispensable), la régulation du débit d'écoulement de catalyseur étant assurée par un réglage classique approprié à l'aide d'hydrogène (hydrogène pur ou hydrogène de l'unité) injecté par une conduite non représentée au niveau de la zone 34.

Un débit de gaz de l'unité suffisant est envoyé pour empêcher l'entraînement d'une partie de l'effluent réactionnel avec les particules catalytiques. Le catalyseur est ensuite entraîné du pot de lift 34 vers le deuxième réacteur 42 par tout dispositif élévateur connu, que dans cette description, on désigne par le mot "lift". Le fluide du lift est avantageusement, comme expliqué ci-dessus, de l'hydrogène de recyclage ou de l'hydrogène produit par l'unité, introduit par la conduite 35. Le catalyseur entraîné ainsi dans le lift 36, atteint le récipient 39 d'où par une pluralité de conduites telles que 40 et 41, il atteint le deuxième réacteur 42. (Le récipient 39 et les conduites 40 et 41 peuvent éventuellement faire partie intégrante du réacteur 42, c'est-à-dire peuvent être aménagées à l'intérieur même du réacteur). Le catalyseur traverse le réacteur 42 sous la forme d'un lit mobile, est soutiré de ce réacteur, en continu, comme pour le premier réacteur 29, par la pluralité de conduites ou jambes telles que 44 et 45 et atteint le pot de lift 47 par la conduite 46.

Par le lift 49, alimenté par exemple par de l'hydrogène de recyclage par la conduite 48, le catalyseur atteint le récipient 52 d'où par la pluralité de conduites telles que 53 et 54, il gagne le troisième réacteur à lit mobile 55. Le catalyseur est soutiré en continu du troisième réacteur 55 comme pour les premier et deuxième réacteurs 29 et 42, par la pluralité de conduites 57 et 58 ; ce catalyseur usé, atteint comme explique ci-dessous le pot de lift 60a par la conduite 59. Ce catalyseur usé est ensuite envoyé dans un ballon "accumulateur - décanteur" 7 au moyen du lift 6 alimenté comme expliqué ci-dessous.

A noter que, dans la figure 1, le catalyseur régénéré est soutiré en continu de l'enceinte ou ballon 15 par la conduite 16 et atteint le "lift pot" (ou pot de lift) 17 d'où il est entraîné en continu par un gaz comme expliqué expliqué ci-dessous vers un ballon récepteur 20 situé au dessus du premier réacteur 29. De ce ballon récepteur 20, le catalyseur s'écoule ensuite en continu sous la forme d'un lit mobile, à travers une pluralité de conduites ou "jambes" telles que 27 et 28 vers le premier réacteur 29. La sulfuration qui est faite après l'hydrogénation du catalyseur régénéré est effectuée par exemple en partie dans le ballon 20 et les jambes 27 et 28.

Le cheminement du catalyseur dans les zones 15, 17 et 20, dans le lift 19 et dans les conduites de transfert de ce catalyseur, est effectué en continu pour assurer une bonne régulation des températures du traitement à l'hydrogène et de la sulfuration et pour éviter de soumettre le catalyseur à de brusques variations de température.

Dans ce schéma de l'art antérieur, on avait réussi à éliminer quelques inconvénients dus à l'emploi autrefois d'hydrogène comme gaz de lift d'une part en amont et d'autre part en aval de la zone de régénération (10). Cette zone de régénération doit être en effet exempte de toute trace d'hydrogène. Dans les procédés antérieurs, il convenait donc en amont de la zone de régénération (10) d'éliminer et de bien purger l'hydrogène du lift ayant servi à transporter vers le régénérateur le catalyseur provenant du dernier réacteur (55). Et de même, il convenait, en aval de la zone de régénération, de rétablir un courant d'hydrogène pour entraîner, par lift, le catalyseur régénéré dans le premier réacteur. Ces dispositifs de protection du régénérateur de toute présence d'hydrogène nécessitait de nombreuses vannes assez larges (de l'ordre de 4 pouces (10, 16 cm) évoluant encore aujourd'hui vers 6 pouces, soit 15,27 cm) en raison des pressions d'hydrogène qui règnent à proximité du régénérateur. Or, de telles vannes ont toujours posé des problèmes spécifiques de fabrication et de sécurité. L'objet de l'art antérieur récent (demande de brevet français N° 88/14246) permettait (comme l'illustre la présente figure 1) d'éviter l'emploi d'hydrogène à proximité du régénérateur. D'une part, l'hydrogène est remplacée par de l'azote (ou par tout autre gaz inerte) dans le lift transportant le catalyseur usé depuis le dernier réacteur traversé par la charge jusqu'au régénérateur, et d'autre part l'hydrogène est également remplacé par de l'azote (ou par tout autre gaz inerte) dans le lift transportant le catalyseur régénéré depuis le régénérateur jusqu'au premier réacteur traversé par la charge. (Par contre, selon cet art antérieur récent, il importe toujours d'utiliser de l'hydrogène dans les autres lifts de l'unité de réformage catalytique comme enseigné aussi dans les brevets US 4 133 733, 4 210 519 et 4 233 268 de la demanderesse dans lesquels on a expliqué les avantages de l'hydrogène sur les gaz inertes comme gaz de transport dans les lifts). Le procédé et le dispositif selon l'art antérieur récent permettent notamment de réduire le nombre de vannes de 4 ou 6 pouces telles que 8 et 8 a en amont du régénérateur (10) et en aval du régénérateur (10) telles que 12 et 12 a. Cette technique évite la fabrication coûteuse et la manipulation d'un trop grand nombre de vannes de large diamètre.

A noter qu'à la fin de la régénération, on purge le régénérateur à l'azote (ou autre gaz inerte) pour éliminer toute trace d'oxygène. On se trouve donc dès cet instant en atmosphère de gaz inerte pour procéder au lift du catalyseur régénéré vers le premier réacteur alors que dans l'art antérieur classique, il fallait, après la purge du régénérateur, réintroduire de l'hydrogène, c'est-à-dire effectuer une manipulation supplémentaire qui est évitée dans l'art antérieur récent.

Conformément à l'art antérieur récent, les deux ballons tampons (7) et (15) de part et d'autre du régénérateur (10) sont sous azote dans la figure 1. Le catalyseur circulant à travers les conduites 21, 9, 11 et 13.

L'étanchéité (donc la sécurité) N₂ - H₂ se fait sur des lignes de faible section, par exemple de l'ordre de 2 pouces (soit 5,08 cm) (au lieu d'environ 4 ou 6 pouces (10,6 ou 15,27 cm), voire plus) et est donc beaucoup plus facile à réaliser.

La séparation N₂ - H₂ en marche normale se fait par des barrages de pression (Delta P dans le sens correct, c'est-à-dire dans le sens qui conduit à une pression, du côté des lignes où circule l'azote supérieure, (surpression) à la pression dans les lignes où circule l'hydrogène.

Tout cela amène une simplification considérable du côté de ces lignes de transfert entre les ballons tampons (7) et (15) d'une part, et le régénérateur (10) d'autre part.

Le dispositif nécessite de ce fait moins de vannes de 4 ou 6 pouces comme expliqué plus haut, tout en pouvant maintenir, comme à l'habitude, les mêmes règles de sécurité imposées.

Dans la figure 1, on indique les dispositifs de transition entre les circuits sous hydrogène et ceux sous azote : ces dispositifs d'abord sont représentés en fond du dernier réacteur 55 par les systèmes 69, 56, 70, 71, permettant le passage du catalyseur sous hydrogène dans le bidon 60 en milieu sous azote, avec disposition de deux vannes 62 et 62 a de deux pouces (5,08 cm) par exemple (vannes fabriquées aisément).

Les dispositifs 73 et 74 (et contrôle 56 b) illustrent la mise en marche du lift 6 alimenté en azote, à partir du réservoir ou bidon 60 a (pot de lift). A l'issue de la régénération, le catalyseur est transporté par le lift 19 (alimenté en azote par les dispositifs 78, 80, 79) vers le ballon 63 et l'on a représenté les lignes 66, 67, et les agencements 65 et 64 qui permettent de remettre le catalyseur sous hydrogène (ligne 65 d'arrivée d'hydrogène, préchauffé par le four 64) après élimination de l'azote par les lignes 75 et les moyens de contrôle 77 et 76. Le catalyseur ici circule à travers deux vannes 68 et 68 a de deux pouces seulement environ.

Sur la figure 1, on a également représenté l'élimination des fines particules de catalyseur en haut du lift 6, par la conduite 82, le séparateur 81 et les lignes 83, et la vanne 84 (avec dispositif de contrôle de pression 85).

Les unités de réformage catalytique ont tendance à être de plus en plus volumineuses pour traiter un maximum de charge. Par ailleurs, on cherche à opérer de nos jours avec des pressions de plus en plus basses : elles étaient il y a quelques années de l'ordre de 8 à 10 bars (8 x 10⁵ Pascal à 10 x 10⁵ Pascal) et sont maintenant de l'ordre de 6 à 3 bars (6 x 10⁵ bars à 3 x 10⁵ Pascal). De telles unités nécessitent en outre du fait de l'emploi d'hydrogène dans le lift conduisant le catalyseur usé depuis le dernier réacteur jusqu'en haut du régénérateur une hauteur importante de ce qu'on appelle communément la "Tour" incluant, sur la figure 1, le bas du pot de lift 17, les ballons tampons 7 et 15, le régénérateur 10 et les vannes importantes 8, 8 a, 12 et 12 a. Or il devenait difficile de construire précisément des unités de grosses capacités fonctionnant sous basse pression, en raison des difficultés de mise en oeuvre des transferts à travers des lignes de vannes en 4 pouces (10,5 cm) ou davantage entre les ballons tampons (7) et (15) et le régénérateur (10).

Ces vannes sont difficiles à fabriquer et très coûteuses, aussi le passage en 6 pouces (15,24 cm) de ces vannes se conçoit difficilement sans un programme de fabrication et d'essais au préalable, programme également très coûteux.

Le problème de ces vannes est actuellement:
· isolation parfaite entre le régénérateur (sous azote et oxygène) et les ballons tampons (sous hydrogène).
· utilisation fréquente de ces vannes dans une atmosphère chargée de fines de catalyseurs.

Ainsi, l'idée de l'art antérieur récent est la suivante : s'arranger pour que ces deux ballons tampons soient sous azote et reporter le problème passage H₂ - azote dans les lignes de petites tailles et notamment d'une part les lignes en sortie du dernier réacteur et d'autre part les lignes en tête du 1er réacteur.

L'art antérieur récent est concevable en respectant les règles suivantes : (les sigles DP et DPC sur les figures concernent les contrôles de pression : "DP" est le différentiel de pression ou "Δ-pressure" ; le terme "DPC" indique qu'une valve de régulation est associée à "DP" pour assurer la chaîne de régulation).
- les premier et dernier lifts fonctionnent avec l'azote ou tout autre gaz inerte
- du côté du ballon tampon supérieur (7) :
   · le débit nécessaire à l'obtention de l'étanchéité sous le dernier réacteur 55 est fait avec de l'azote ou tout autre gaz inerte, mais de manière à avoir une surpression (très faible), pour limiter au maximum l'envoi d'azote vers la section réactionnelle. On devrait pouvoir limiter cet envoi à quelques kg par heure ;
   · les vannes utilisées (telles que 62 et 62 a) sous le dernier réacteur de l'ordre de 2 pouces (5,08 cm) seront motorisées et serviront de vanne de sécurité pour isoler la section régénération en cas de problème ;
   · le ballon tampon supérieur (7) est seulement sous azote (admission par (92) et les conditions opératoires (ou "design") sont beaucoup moins sévères, en particulier la température. Le lift 6 est sous azote ou autre gaz inerte.

Du côté du ballon tampon inférieur (15):
- ce ballon est uniquement sous azote (admission par 91) ou gaz inerte à basse température; le catalyseur s'écoule dans le pot de lift 17 par la conduite 16.
- lift 19 sous azote ou autre gaz inerte : le dispositif d'admission d'azote 78 dans les lignes 90, 95 et 96 est contrôlé par les dispositifs 80 et 79 ;
- trémie supérieure (63) - (20) en deux parties:
   · partie supérieure (63) avec *élutriation* (c'est-à-dire décantation ou séparation) *sous azote* ou tout autre gaz inerte
   · partie inférieure (20) stockage et réduction sous H₂ chaud, introduit par la ligne (65) *préchauffé* par un four électrique 64, avec contrôle DP (101) et DPC (77) via (76) par la vanne (75).
- les deux parties de la trémie supérieure 63-20 sont séparées par une jambe 66-67 pleine de catalyseur équipée par exemple de deux vannes (68 et 68 a) par exemple de l'ordre de 2 pouces (5,08 cm), motorisées qui assureront la sécurité.

Les vannes de sécurité pourront être activées en cas de différence de pression incorrecte, d'élévation de température intempestive, de mauvaise pureté de l'azote, etc...

Cette disposition de l'art antérieur récent entraîne la création d'un nouveau réseau d'azote pour la circulation de catalyseur et aussi pour assurer l'élutriation (séparation), à travers les conduites (97) et (100), le séparateur (93) et la vanne (94), en liaison avec les contrôles DP (98) et DPC (99).

Compte tenu des quantités d'azote nécessaires, il semble judicieux de prévoir une recirculation autonome avec un petit compresseur (DP environ 3 à 4 bars).

Un des avantages de cet art antérieur récent illustré par la figure 1 est qu'il n'y a plus nécessité de prévoir un système très sophistiqué pour assurer l'étanchéité entre les *ballons tampons* et le *régénérateur*, sans *diminuer* la sécurité de l'opération.

Un tel système réduit de manière importante le nombre de grosses vannes et surtout les conditions opératoires des éventuelles autres grosses vannes restantes dans l'unité.

Un autre avantage à prendre aussi en compte est la diminution sensible de la hauteur totale de la tour (diminution d'au minimum 5 à 6 mètres).

C'est en opérant ainsi, mettant en oeuvre les jeux de vannes adéquats 62 et 62 a sous le dernier réacteur et 68 et 68 a au dessus de la zone de réduction du catalyseur régénéré (avant son introduction dans le premier réacteur qu'on peut supprimer la plupart des grosses vannes directement en amont et en aval du régénérateur comme expliqué plus haut).

Un tel schéma présente cependant quelques inconvénients : le trajet du catalyseur du dernier réacteur 55 vers la régénérateur (10) est empêché ou tout au moins ralenti par la différence de pression qui règne entre ce dernier réacteur (de l'ordre de 3,2 bars par exemple) et le régénérateur (de l'ordre de 4,6 bars par exemple). Il est donc nécessaire d'aménager sur ce trajet un sas (tel que 7) et des vannes telles que 8. Ce matériel est encombrant, nécessite des réglages permanents et à la longue les particules de catalyseur sont endommagées en partie par la circulation à travers le système de vannes. La présente invention remédie à ces défauts par ce que, en particulier, elle permet de supprimer les vannes sur le trajet entre le sas (ou ballon accumulateur) (7) et la zone de régénération (10).

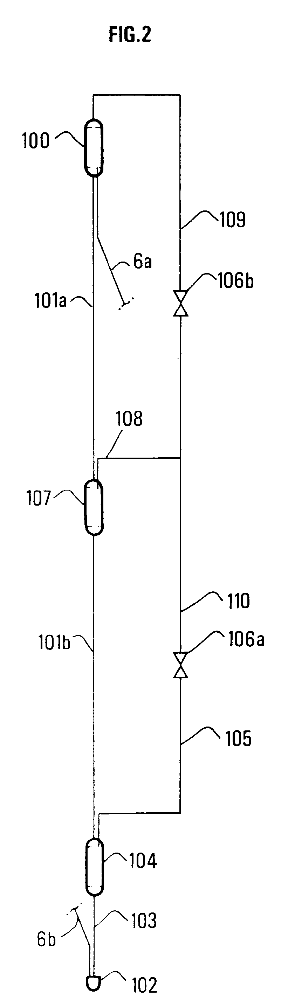

L'invention est illustrée par la figure 2. Cette figure 2 est schématisée dans un souci de simplification mais il faut garder à l'esprit que les dispositifs de remontée (lift) du catalyseur depuis la dernière zone de réaction (55) jusqu'au haut de la zone de régénération (10) et depuis le bas de la zone de régénération (10) jusqu'au sommet du premier réacteur sont ceux décrits dans la figure 1, c'est-à-dire fonctionnent à l'aide d'un gaz inerte (l'azote, plus particulièrement) et non à l'aide d'hydrogène.

L'invention est caractérisée en ce que le jambage de descente depuis le dit ballon supérieur (100) jusqu'au ballon pot de lift inférieur (102) est scindé en deux tronçons, c'est-à-dire en 2 tubes (101 a) et (101 b) séparés par un ballon médian (107). Au bas du jambage (101 b) est également disposé un ballon (104) intercalé entre le bas du jambage et le ballon lift pot inférieur (102) relié à (104) par le jambage (103). Le ballon supérieur (100), le ballon médian (107) et le ballon (104) intercalé entre le bas du jambage (101 b) et le ballon lift pot inférieur (102) sont chacun équipés d'un système de filtres schématisés par les lignes (109), (108), (105), (110). Dans ce cas, des vannes d'équilibrage sont montées en parallèles (106 a) et (106 b), de façon à pouvoir changer les régimes de pression des deux parties du jambage (ou "seal-leg"). Ici l'écoulement de catalyseur est discontinu. On utilise donc deux tubes en série, alternativement bloqués et débloqués. La hauteur totale des 2 tubes (101 a) et (101 b) est inférieure à la hauteur du jambage unique dans la précédente configuration.

Quand la vanne supérieure (106 b) est ouverte, le catalyseur coule du ballon (100) dit supérieur vers le ballon médian (107) tandis que la partie basse (tube inférieur (101 b) encaisse un Δ P important puisque la vanne (106 a) du bas est fermée.

Réciproquement, quand la vanne du haut (106 b) est fermée, la partie haute (tube supérieur (101 a)) encaisse un Δ P important et se bloque, tandis que le catalyseur coule dans la partie basse car la vanne du bas (106 a) étant ouverte, le Δ P est maintenu dans la plage d'écoulement normal.

Le volume des ballons est calculé pour éviter un trop grand nombre de manoeuvres des vannes d'équilibrage. Des crépines peuvent être montées sur les piquages des lignes d'équilibrage pour éviter un entraînement des billes de catalyseur vers ces vannes.

A titre d'exemple, la jambe verticale (ou "seal-leg") peut permettre d'encaisser une contre pression de 30 à 40 m bars par mètre. Si on désire ainsi encaisser une contre-pression de l'ordre de 1 500 m bars, on utilisera un jambe de 40 à 50 mètres.

Ici, dans cette variante, l'invention concerne donc un procédé de réformage d'hydrocarbures ou de production d'hydrocarbures aromatiques, en présence d'un catalyseur, dans lequel on fait circuler une charge initiale, constituée d'hydrocarbures, et de l'hydrogène à travers au moins 2 zones de réaction, disposées en série, côte à côte, chacune de ces zones de réaction étant de type à lit mobile, la charge circulant successivement dans chaque zone de réaction, et le catalyseur circulant également successivement à travers chaque zone de réaction en s'écoulant en continu, sous la forme d'un lit mobile, de haut en bas dans chacune d'elle, le catalyseur soutiré du bas de chaque zone de réaction (sauf la dernière) étant transporté dans un courant d'hydrogène au sommet de la zone de réaction suivante, le catalyseur, soutiré en continu du bas de la dernière zone de réaction traversée par la charge, étant ensuite envoyé dans une zone de régénération, le procédé caractérisé :
(a) en ce que le catalyseur usé soutiré de la dernière zone de réaction traversée par la charge est purgé de tout l'hydrogène environnant,
(b) en ce que ensuite on met le catalyseur usé sous gaz inerte,
(c) en ce que, à l'aide d'un courant d'un gaz inerte, on envoie le catalyseur usé dans une zone de régénération, par au moins un système de deux dispositifs élévateurs (6 a) et (6 b), de façon (a) à élever dans un premier temps le catalyseur usé, à l'aide du premier dispositif élévateur (6 a) depuis le bas de la dernière zone de réaction (55) traversée par la charge jusqu'à un ballon supérieur (100), (b) à faire descendre en discontinu le catalyseur depuis le dit ballon supérieur (100) jusqu'au ballon pot de lift inférieur (102) à travers une conduite scindée en au moins deux tronçons, un premier tronçon (101 a) conduisant par gravité le catalyseur depuis le dit ballon supérieur (100) jusqu'à un ballon médian (107), un deuxième tronçon (101 b) conduisant par gravité le catalyseur depuis le dit ballon médian (107) jusqu'à un ballon intercalaire (104), d'où le catalyseur est entraîné par gravité vers le ballon pot de lift inférieur (102), les deux tronçons (101 a) et (101 b) étant équipés de circuits de filtres et de vannes d'équilibrage (106 a) et (106 b), de façon à pouvoir changer les régimes de pression des deux tronçons, en bloquant et débloquant alternativement la circulation de catalyseur dans ces deux tronçons, et (c) à élever ensuite à l'aide d'un deuxième dispositif élévateur (6 b) le catalyseur depuis le ballon pot de lift inférieur (102) jusque dans un ballon accumulateur disposé au sommet de la zone de régénération,
(d) en ce que le catalyseur régénéré est envoyé au moyen d'un courant de gaz inerte dans une zone d'élutriation des fines particules de catalyseur régénéré et en ce que on purge ensuite tout le gaz inerte environnant,
(e) en ce que on introduit le catalyseur régénéré dans une enceinte en présence d'hydrogène, en vue de procéder à une réduction partielle ou totale du catalyseur avant de l'envoyer en continu dans la première zone de réaction.

## Revendications

1. Procédé de réformage d'hydrocarbures ou de production d'hydrocarbures aromatiques, en présence d'un catalyseur, dans lequel on fait circuler une charge initiale, constituée d'hydrocarbures, et de l'hydrogène à travers au moins 2 zones de réaction, disposées en série, côte à côte, chacune de ces zones de réaction étant de type à lit mobile, la charge circulant successivement dans chaque zone de réaction, et le catalyseur circulant également successivement à travers chaque zone de réaction en s'écoulant en continu, sous la forme d'un lit mobile, de haut en bas dans chacune d'elle, le catalyseur soutiré du bas de chaque zone de réaction (sauf la dernière) étant transporté dans un courant d'hydrogène au sommet de la zone de réaction suivante, le catalyseur, soutiré en continu du bas de la dernière zone de réaction traversée par la charge, étant ensuite envoyé dans une zone de régénération, le procédé étant caractérisé:
(a) en ce que le catalyseur usé soutiré de la dernière zone de réaction traversée par la charge est purgé de tout l'hydrogène environnant,
(b) en ce que ensuite on met le catalyseur usé sous gaz inerte,
(c) en ce que, à l'aide d'un courant d'un gaz inerte, on envoie le catalyseur usé dans une zone de régénération par au moins un système de deux dispositifs élévateurs, de façon (a) à élever dans un premier temps le catalyseur usé, à l'aide du premier dispositif élévateur depuis le bas de la dernière zone de réaction traversé par la charge jusqu'à un ballon supérieur, (b) à faire descendre en discontinu le catalyseur depuis le dit ballon supérieur jusqu'au ballon pot de lift inférieur à travers une conduite scindée en au moins deux tronçons, un premier tronçon (101 a) conduisant par gravité le catalyseur depuis le dit ballon supérieur jusqu'à un ballon médian, un deuxième tronçon conduisant par gravité le catalyseur depuis le dit ballon médian jusqu'à un ballon intercalaire, d'où le catalyseur est entraîné par gravité vers le ballon pot de lift inférieur, les deux tronçons étant équipés de circuits de filtres et de vannes d'équilibrage (106 a) et (106 b) de façon à pouvoir changer les régimes de pression des deux tronçons, en bloquant et débloquant alternativement la circulation de catalyseur dans ces deux tronçons, et (c) à élever ensuite, à l'aide d'un deuxième dispositif élévateur, le catalyseur depuis le ballon pot de lift inférieur jusque dans un ballon accumulateur disposé au sommet de la zone de régénération,
(d) en ce que le catalyseur régénéré est envoyé au moyen d'un courant de gaz inerte dans une zone d'élutriation des fines particules de catalyseur régénéré et en ce que on purge ensuite tout le gaz inerte environnant,
(e) en ce que on introduit le catalyseur régénéré dans une enceinte en présence d'hydrogène, en vue de procéder à une réduction partielle ou totale du catalyseur avant de l'envoyer en continu dans la première zone de réaction.

## Patentansprüche

1. Verfahren zum Reformieren von Kohlenwasserstoffen oder zur Produktion von aromatischen Kohlenwasserstoffen in Anwesenheit eines Katalysators, bei dem man eine Anfangscharge, bestehend aus Kohlenwasserstoffen und Wasserstoff (quer) durch wenigstens zwei Reaktionszonen, die in Reihe seitlich nebeneinander angeordnet sind, zirkulieren lässt, wobei jede dieser Reaktionszonen vom Typ mit beweglichem Bett ist, wobei die Charge nacheinander in jeder Reaktionszone zirkuliert und der ebenfalls nacheinander durch jede Reaktionszone zierkulierende Katalysator kontinuierlich in Form eines beweglichen Bettes von oben nach unten in jedem hiervon fliesst, wobei der unten aus jeder Reaktionszone (ausser der letzteren) abgezogene Katalysator in einem Wasserstoffstrom zum Kopf der folgenden Reaktionszone transportiert wird, der kontinuierlich unten aus der letzten Reaktionszone, die von der Charge durchströmt wird, abgezogene Katalysator anschliessend in eine Regenerationszone geschickt wird, wobei das Verfahren dadurch gekennzeichnet ist, daß:
a) der verbrauchte aus der letzten Reaktionszone, die von der Charge durchsetzt wird, abgezogene Katalysator von allem ihn umgebenden Wasserstoff gereinigt wird
b) anschliessend der verbrauchte Katalysator unter Inertgas gesetzt wird,
c) und daß mit Hilfe eines Inertgasstroms man den verbrauchten Katalysator in eine Regenerationszone über wenigstens ein System von zwei Hubeinrichtungen derart schickt, daß a) in einem ersten Takt der verbrauchte Katalysator mit Hilfe einer ersten Hubeinrichtung unten aus der letzten Reaktions zone, die von der Charge durchsetzt wird in einen oberen Ballon gehoben wird, b) diskontinuierlich der Katalysator aus diesem oberen Ballon bis zu dem unteren Hebekolben-Ballon über eine Leitung abgesenkt wird, die in wenigstens zwei Abschnitte aufgeteilt ist, einen ersten Abschnitt (101a), der durch Schwerkraft den Katalysator aus dem oberen Ballon bis zum mittleren Ballon führt, einen zweiten Abschnitt, der vermittels Schwerkraft den Katalysator von dem mittleren Ballon zu einem Zwischenballon führt, von wo der Katalysator durch Schwerkraft gegen den unteren Hebekolben-Ballon mitgerissen wird, wobei die beiden Abschnitte mit Filterkreisen und Ausgleichsschieberventilen (106a) und (106b) derart ausgestattet sind, daß die Druckbereiche der beiden Abschnitte geändert werden können, in dem man abwech selnd die Zirkulation in den beiden Abschnitten blockiert und deblockiert und c) anschliessend mit Hilfe einer zweiten Hebeeinrichtung den Katalysator aus dem unteren Hebekolben-Ballon in einen Sammlerballon hebt, der am Kopf der Rege nerationszone angeordnet ist,
d) und daß der regenerierte Katalysator, vermittels eines inerten Gasstroms in eine staubabscheidezone oder eine Windsichtzone für feine Partikel regenerierten Katalysators geschickt wird und daß man anschliessend das gesamte Umgebungsinertgas reinigt, und
e) daß man den regenerierten Katalysator in eine Kammer in Anwesenheit von Wasserstoff einführt, um eine teilweise oder totale Reduktion des Katalysators herbeizuführen, bevor er kontinuierlich in die erste Reaktionszone geschickt wird.

## Claims

1. A process for reforming hydrocarbons or for the production of aromatic hydrocarbons, in the presence of a catalyst, wherein an initial charge constituted of hydrocarbons and hydrogen is circulated through at least 2 reaction zones arranged in series, side by side, each of these reaction zones being of the moving bed type. the charge circulating successively in each reaction zone, and the catalyst also circulating successively through each reaction zone. flowing continuously in the form of a moving bed from the top to the bottom in each of them. the catalyst which is drawn off from the bottom of each reaction zone (except the last) being transported in a flow of hydrogen to the top of the following reaction zone, and the catalyst which is drawn off continuously from the bottom of the last reaction zone through which the charge has passed then being sent to a regeneration zone. the process being characterised:
(a) in that the spent catalyst drawn off from the last reaction zone through which the charge has passed is purified of all surrounding hydrogen.
(b) in that the spent catalyst is then placed in inert gas,
(c) in that, with the aid of a flow of an inert gas, the spent catalyst is sent to a regeneration zone by at least one system of two rising devices. in such a way as to (a) in a first stage lift the spent catalyst using the first rising device from the bottom of the last reaction zone through which the charge has passed to an upper round-bottomed flask, (b) to discontinuously lower the catalyst from said upper round-bottomed flask to the round-bottomed receptacle of the lower riser through a conduit which is divided into at least two portions, a first portion (101 a) which, by gravity, takes the catalyst from said upper round-bottomed flask to a central round-bottomed flask, and a second portion which takes the catalyst, by gravity, from said central round-bottomed flask to a round-bottomed flask inserted therein, whence the catalyst is taken, by gravity, to the round-bottomed receptacle of the lower riser, the two portions being provided with circuits of equilibration filters and valves (106a) and (106b) in such a way as to change the pressure system. of the two portions by alternately stopping and releasing circulation of catalyst in the two portions, and, (c) to then raise the catalyst, using a second rising device, from the round-bottomed flask receptacle of the lower riser to an accumulator round-bottomed flask placed at the top of the regeneration zone.
(d) in that the regenerated catalyst is sent by means of a flow of inert gas into an elutriation zone for fine particles of regenerated catalyst, and in that all the surrounding inert gas is then purged.
(e) in that the regenerated catalyst is introduced into a chamber in the presence of hydrogen, for the purpose of partially or totally reducing the catalyst before it is sent continuously into the first reaction zone.
